(19) Europäisches Patentamt
European Patent Office
Office européen des brevets

(11) Veröffentlichungsnummer: **0 249 850**
**A2**

# (12) EUROPÄISCHE PATENTANMELDUNG

(21) Anmeldenummer: **87108275.6**

(22) Anmeldetag: **09.06.87**

(51) Int. Cl.4: **C09D 5/44**

(30) Priorität: **19.06.86 AT 1665/86**

(43) Veröffentlichungstag der Anmeldung:
**23.12.87 Patentblatt 87/52**

(84) Benannte Vertragsstaaten:
**BE CH DE ES FR GB IT LI NL SE**

(71) Anmelder: **Vianova Kunstharz Aktiengesellschaft**

**A-8402 Werndorf(AT)**

(72) Erfinder: **Paar, Willibald, Dr.**
**Schanzelstrasse 19**
**A-8010 Graz(AT)**

(74) Vertreter: **Pitter, Robert, Dr. et al**
**Leechgasse 21 Postfach 191**
**A-8010 Graz(AT)**

## (54) Selbstvernetzende kationische Lackbindemittel.

(57) Die Erfindung betrifft ein Verfahren zur Herstellung von nach Protonierung wasserverdünnbaren und bei erhöhter Temperatur selbstvernetzenden kationischen Lackbindemitteln, welche durch Umsetzung von β-Hydroxyaminen der allgemeinen Formel

$$(R_1 - NH - CH_2 - CH(OH)CH_2 - O \xrightarrow[\;2-4\;]{} R_2$$

wobei $R_1$ einen (Cyclo)-alkylrest und/oder einen Hydroxyalkylrest und/oder einen tert.-Amino-(cyclo)-alkylrest, sowie gegebenenfalls einen bei der Umsetzung von Glycidylgruppen mit einem primär-sekundären oder einem diprimären Amin resultierenden Rest und $R_2$ einen aliphatischen und/oder aromatischen Rest einer Polyepoxidverbindung bedeutet, mit partiell blockierten Di-oder Polyisocyanaten und nachträglicher Reaktion mit Formaldehyd erhalten werden. Die Produkte zeigen neben ausgezeichneten Filmeigenschaften besonders günstige verarbeitungstechnische Eigenschaften, da sie nicht die sonst bei solchen Systemen auftretenden Thixotropieeffekte zeigen. Die Produkte eignen sich insbesonders zur Formulierung von kathodisch abscheidbaren Elektrotauchlacken.

EP 0 249 850 A2

## Selbstvernetzende kationische Lackbindemittel

Aus der AT-PS 382 384 sind Harnstoffgruppen tragende kationische Verbindungen bekannt, welche durch Umsetzung von β-Hydroxyaminen, Isocyanatverbindungen und Formaldehyd erhalten werden und welche als im wesentlichen wasserunlösliche Vernetzungskomponenten für kationische Lackbindemittel dienen.

Es wurde nun gefunden, daß aus den dort angegebenen Produkten, welche aus β-Hydroxyaminen der Formel

$$(R_1 - NH - CH_2 - CH(OH) - CH_2 - O \xrightarrow{\;\;})_{2} R_2$$

wobei $R_1$ einen Alkylrest oder einen Hydroxyalkylrest und $R_2$ einen aliphatischen und/oder aromatischen Rest einer Di-oder Polyglycidylverbindung bedeutet, durch Umsetzung mit partiell blockierten Di-oder Polyisocyanaten und nachträglicher Reaktion mit Formaldehyd unter Abspaltung von Wasser erhalten werden, bei entsprechender Modifikation selbstvernetzende, nach Protonierung der basischen Gruppen wasserverdünnbare Bindemittel für Lacke mit besonders günstigen Eigenschaften, insbesonders für die kathodische Elektroabscheidung formuliert werden können.

Die vorliegende Erfindung betrifft demgemäß ein Verfahren zur Herstellung von nach Protonierung wasserverdünnbaren und bei erhöhter Temperatur selbstvernetzenden kationischen Lackbindemitteln auf der Basis von Harnstoffgruppierungen aufweisenden modifizierten Epoxidharzen, welches dadurch gekennzeichnet ist, daß man β-Hydroxyamine der allgemeinen Formel

$$(R_1 - NH - CH_2 - CH(OH)CH_2 - O)_{2-4} R_2$$

wobei $R_1$ einen (Cyclo)-Alkylrest und/oder einen Hydroxyalkylrest und/oder einen tert.-Amino-(cyclo)-alkylrest, sowie gegebenenfalls einen bei der Umsetzung von Glycidylgruppen mit einem primär-sekundären oder einem diprimären Amin resultierenden Rest und $R_2$ einen aliphatischen und/oder aromatischen Rest einer Polyepoxidverbindung bedeutet, bei 30 bis 50°C mit partiell blockierten Di-oder Polyisocyanaten in einem solchen Verhältnis umsetzt, daß pro sekundärer Aminogruppe eine freie Isocyanatgruppe eingesetzt wird, und das Reaktionsprodukt bei 80 bis 130 °C. gegebenenfalls in Gegenwart eines basischen Katalysators, mit 0,5 bis 1,0 Mol Formaldehyd pro eingesetzter Isocyanatgruppe unter Entfernung von 1 Mol Reaktionswasser pro Mol Formaldehyd reagiert, wobei die so erhaltenen Produkte eine Aminzahl von mindestens 30 mg KOH/g aufweisen, die auf tertiären Aminogruppen beruht, welche aus einem tert.-Amino-(cyclo)-alkylrest und/oder aus tertiäre Aminogruppen aufweisenden Blockierungsmitteln in den Isocyanatverbindungen stammen.

Die Erfindung betrifft weiters die Verwendung der Bindemittel zur Formulierung von wasserverdünnbaren Lacken, insbesonders von kathodisch abscheidbaren Elektrotauchlacken.

Es hat sich gezeigt, daß Lacke auf der Basis der erfindungsgemäßen Bindemittel nicht die sonst bei Lacken auf der Basis von Harnstoffgruppen enthaltenden Epoxidharzen in Erscheinung tretende Thixotropie aufweisen, wodurch die Verarbeitung der Produkte wesentlich erleichtert wird. Überdies erlauben die Lacke auf dieser Bindemittelbasis eine Herabsetzung der Einbrenntemperatur bis auf 150°C, was insbesonders im Vergleich zu den derzeit eingesetzten Elektrotauchlacken einen wesentlichen Fortschritt darstellt. Aufgrund der Harnstoffstrukturen zeigen die Produkte ausgezeichnete Haftungseigenschaften sowohl zum Substrat als auch gegenüber weiteren Lackschichten.

Die β-Hydroxyamine der allgemeinen Formel

$$(R_1 - NH - CH_2 - CH(OH)CH_2 - O)_{2-4} R_2$$

wobei $R_1$ einen Alkylrest und/oder einen Hydroxyalkylrest und/oder einen tert.-Aminoalkylrest und $R_2$ einen aliphatischen und/oder aromatischen Rest eines Di-oder Polyglycidylethers bedeutet, werden durch Umsetzung der Glycidylether mit Aminen, welche eine primäre Aminogruppe aufweisen, erhalten.

Als Diglycidylether werden vorzugsweise die bekannten Epoxidharze auf Basis von Diphenylolalkanen eingesetzt. Die Epoxidharze können gegebenenfalls durch epoxidreaktive Verbindungen, wie Dicarbonsäuren, Amine,Diole, Diphenole und ähnlichen, gegebenenfalls komplexeren Verbindungen, wie Oligoester, -ether oder -amide kettenverlängert sein. Andere Diepoxidverbindungen leiten sich von Dialkoholen, insbesonders Polyalkylenglykolen oder von Dicarbonsäuren ab.

Geeignete Polyglycidylether leiten sich von Phenolnovolaken ab. Andere Verbindungen dieser Art sind epoxidierte Butadienpolymerisate, epoxidierte Öle u. ä.

Als Amine mit primären Aminogruppen kommen vorzugsweise N,N-Dialkylalkylendiamine zum Einsatz. Durch den tert. Aminoalkylrest dieser Verbindungen werden gleichzeitig die für die Protonierung und damit die für die Wasserverdünnbarkeit verantwortlichen basischen Gruppen eingebaut. Beispiele für diese Verbindungsklasse sind das N,N-Dimethylethylendiamin (N,N-Dimethylaminoethylamin) und dessen Homologe oder das 1-Diethylamino-4-aminopentan, Dimethylaminoneopentanamin, 4-Dimethylamino-4'-aminodicyclohexylmethan u. ä. In gleicher Weise können auch allein oder im Gemisch mit den genannten prim.-tert.-Diaminen, primäre (cyclo)aliphatische Monoamine, wie Ethylamin und seine Homologen oder Cyclohexylamin u. ä. bzw. primäre Hydroxyamine wie Monoethanolamin und seine Homologen eingesetzt werden. Gegebenenfalls können auch diprimäre Diamine eingesetzt werden, doch ist in diesem Fall die hohe Funktionalität zu berücksichtigen. Beim Einsatz von primär-sekundären Diaminen, wie Aminoethylpiperazin oder Aminoethylethanolamin ist die Menge der eingesetzten Monoisocyanate auf die Zahl der sekundären Aminogruppen stöchiometrisch abzustimmen.

Zur Herstellung der erfindungsgemäß verwendeten kationischen Bindemittel werden die β-Hydroxyamine mit partiell blockierten Di-oder Polyisocyanaten umgesetzt. Durch die bevorzugte Reaktion der Isocyanatgruppe mit der Aminogruppe entsteht eine das Eigenschaftsbild der Bindemittel mitbestimmende Harnstoffgruppierung. Vorzugsweise weisen die partiell blockierten Di-oder Polyisocyanate eine freie Isocyanatgruppe auf. Als Diioscyanatverbindungen werden vorzugsweise solche Vertreter dieser Gruppe eingesetzt, deren NCO-Gruppen unterschiedliche Reaktionsfähigkeit aufweisen, beispielsweise Isophorondiisocyanat oder 2,4-Toluylendiisocyanat, letzteres auch in der handelsüblichen Mischung mit dem 2,6-Toluylendiisocyanat.

Als Blockierungsmittel können alle üblichen Verbindungen eingesetzt werden, unter der Voraussetzung, daß die Blockierung auch im wäßrigen Medium beständig ist. Bevorzugt werden Monoalkohole für diesen Zweck verwendet. Gegebenenfalls kann über das Blockierungsmittel auch die Einführung der protonierbaren basischen Gruppen erfolgen. Dies ist beispielsweise der Fall, wenn Alkanolamine wie Diethylethanolamin u. a. als Blockierungsmittel verwendet werden.

In einer letzten Reaktionsstufe werden die Harnstoffgruppen tragenden Zwischenprodukte mit Formaldehyd umgesetzt. Bei dieser Reaktion wird pro Mol Formaldehyd ein Mol Wasser abgespalten. Aufgrund der Tatsache, daß die Viskosität bei dieser Reaktion abnimmt, kann angenommen werden, daß eine Blockierung von Funktionen erfolgt, welche für die Ausbildung von Wasserstoffbrükken verantwortlich sind.

Die Herstellung der β-Hydroxyamine gemäß der angegebenen Formel erfolgt durch Umsetzung der Glycidylverbindung mit dem Amin bei 30 bis 60°C, vorzugsweise in Gegenwart aprotischer Lösemittel, wie Toluol, Xylol oder Diethylenglykoldimethylether. Pro Epoxidgruppe kommt dabei eine primäre Aminogruppe zum Einsatz. Die Reaktion ist beendet, wenn keine freien Epoxidgruppen mehr nachweisbar sind.

Die Umsetzung der β-Hydroxyamine mit der partiell blockierten Isocyanatverbindung erfolgt bei 30 bis 50°C, wobei die Zugabe der Isocyanatverbindung unter Kühlen erfolgt. Das nach vollständiger Umsetzung der Isocyanatgruppen resultierende Reaktionsprodukt zeigt starke Thixotropie.

Die weitere Kondensation mit dem Formaldehyd erfolgt bei 80 bis 130°C , wobei das entstehende Reaktionswasser azeotrop mit Hilfe eines Lösemittels wie Toluol oder Spezialbenzin (Siedebereich 80 bis 120°C) aus der Reaktionsmasse entfernt wird. Bei dieser Reaktion ist eine deutliche Abnahme der Viskosität zu beobachten. Nach Entfernen des Schleppmittels unter Vakuum, wird das Produkt in einem wassertoleranten Lösemittel, wie Propylenglykolmonomethylether oder Diethylenglykoldimethylether gelöst. Der Formaldehyd wird vorzugsweise in Form des Paraformaldehyds (90 bis 100 % $CH_2O$) eingesetzt. Diese Reaktion kann gegebenenfalls in Gegenwart eines Katalysators, wie Triethylamin, erfolgen.

Die Mengenverhältnisse zwischen den Komponenten werden so gewählt, daß pro NH-Gruppe des β-Hydroxyamins ein NCO-Äquivalent bzw, 0,5 bis 1,0 Mol Formaldehyd eingesetzt wird. Die basischen Gruppierungen, welche zur Protonisierung zur Verfügung stehen, müssen einer Aminzahl von mindestens 30 mg KOH/g entsprechen.

Die Formulierung und Herstellung von Lacken, welche die beanspruchten Bindemittel enthalten, für die verschiedenen Applikationsmethoden ist dem Fachmann bekannt und bedarf keiner weiteren Erklärungen. Eine beispielhafte Formulierung für kathodisch abscheidbare Lacke wird bei der Prüfung der erläuternden Beispiele gegeben. Die Härtung der Lacke kann bereits bei Tem peraturen ab 150°C erfolgen. Gegebenenfalls können auch zusätzliche Vernetzungkomponenten, wie sie dem Fachmann bekannt sind, eingesetzt werden..

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

In den Beispielen werden folgende Abkürzungen verwendet:

EPH I Diepoxidharz auf Basis von Bisphenol A, Epoxidäquivalentgewicht ca. 190
EPH II Diepoxidharz auf Basis von Bisphenol A, Epoxidäquivalentgewicht ca. 475
EPH III Epoxidierter Phenolnovolak, Epoxidäquivalentgewicht ca. 180 mit durchschnittlich 3,6 Phenolkernen pro Molekül
DEAPA N,N-Diethylpropylendiamin
HMDA 1,6-Hexamethylendiamin
EHA 2-Ethylhexylamin
HA n-Hexylamin
MIPA Monoisopropanolamin
AEP Aminoethylpiperazin
MIC 1 mit 2-Ethylhexanol halbblockiertes TDI
MIC 2 mit einem N-Hydroxyoxazolidin halbblockiertes TDI; 70%ig in Toluol (Das N-Hydroxyoxazolidin wurde in bekannter Weise aus 73 Tlen Monoisopropanol, 268 Tlen Octadecenoxid und 33 Tlen Paraformaldehyd 91 %ig hergestellt)
MIC 3 mit Ethylenglykolmonoethylether halbblockiertes IPDI
MIC 4 Umsetzungsprodukt aus 1 Mol IPDI und 1 Mol Diethanolamin
TDI Toluylendiioscyanat (handelsübliches 80/20 Isomerengemisch)
IPDI Isophorondiisocyanat
FA Paraformaldehyd, 91 % $CH_2O$
DGDM Diethylenglykoldimethylether
MEK Methylethylketon

<u>Beispiele 1 bis 5:</u> In einem geeigneten Reaktionsgefäß wird eine 60 %ige Lösung des Epoxidharzes vorgelegt und bei 30°C mit dem Amin versetzt, wobei die Temperatur 60°C nicht überschreiten soll. Die Temperatur wird noch gehalten, bis alle Epoxidgruppen verbraucht sind. Anschließend wird bei 30 bis maximal 50°C unter Kühlung das halbblockierte Diisocyanat in Portionen zugegeben. Die Reaktion ist mit der Zugabe üblicherweise abgeschlossen (NCO-Wert = 0). Nach Erwärmen auf 70°C wird der Paraformaldehyd zugegeben und die Temperatur erhöht bis sich durch das vorgelegte Toluol eine gleichmäßige Rückflußdestillation unter Abtrennung des Reaktionswassers eingestellt hat. Die Reaktion wird beendet, wenn die berechnete Wassermenge (1 Mol Wasser pro 1 Mol eingesetzter $CH_2O$, 100 %) abgetrennt ist. Nach Abdestillieren des Schleppmittels im Vakuum wird der Ansatz im angegebenen Lösemittel gelöst.

Menge und Art der Ausgangsstoffe sind in der Tabelle 1 zusammengefaßt. Alle Angaben beziehen sich auf Feststoff.

Tabelle 1

| Beispiel | EPH Tle | EPH (Val) | AMIN Tle | AMIN ($NH_2$-Val) | MIC Tle | MIC (Mol) | FA Tle | FA (Mol) |
|---|---|---|---|---|---|---|---|---|
| 1 | 950 EPH II | (2) | 195 DEAPA<br>65 EHA | (1,5)<br>(0,5) | 608 MIC 1 | (2) | 66 | (2) |
| 2 | 190 EPH I | (1) | 117 DEAPA | (0,9) | 753 MIC 2 | (1) | 33 | (1) |
| 3 | 950 EPH II | (2) | 221 DEAPA<br>17 HMDA | (1,7)<br>(0,3) | 624 MIC 3 | (2) | 66 | (2) |
| 4 | 180 EPH III | (1) | 101 HA | 1,0) | 339 MIC 4 | (2) | 33 | (1) |
| 5 | 190 EPH I<br>475 EPH II | (1)<br>(1) | 73 MIPA<br>129 AEP | (1,0)<br>(1,0) | 912 MIC 1 | (3) | 66 | (2) |

Prüfung der erfindungsgemäßen Lackbindemittel

1. Prüfung des Klarlackes

Die Bindemittellösungen gemäß den Beispielen werden mit der in der Tabelle 2 angegebenen Menge Ameisensäure (Millimol pro 100 g Festharz) partiell neutralisiert und nach Zusatz des Katalysators mit deionisiertem Wasser auf einen Festkörpergehalt von 15 % verdünnt. Der Klarlack wird auf eine Glasplatte aufgegossen und nach einer Abluftzeit von 10 Minuten bei 40°C 15 Minuten bei der angegebenen Temperatur vernetzt. Die Temperatur ist so ausgewählt, daß die ausgehärteten Filme bei einer Schichtstärke von 20 ± 2 µm eine Beständigkeit gegenüber 200 Doppelhüben mit MEK zeigen. Als Katalysator wird Dibutylzinndilaurat, Cobaltoctoat oder Bleioctoat eingesetzt. Die angegebene Menge ist als Metall/Festharz berechnet.

Tabelle 2 Klarlackversuche

| Beispiel | Katalyator | Neutralisation | Einbrenntemperatur °C |
|---|---|---|---|
| 1 | 0,6 Sn | 30 | 155 |
| 2 | 0,2 Co | 40 | 160 |
| 3 | 0,8 Sn | 45 | 150 |
| 4 | 0,5 Pb | 60 | 155 |
| 5 | 0,8 Sn | 50 | 160 |

2. Prüfung von pigmentierten Lacken

Aus den in Tabelle 1 angegebenen Bindemitteln werden durch Mischen von 75 Tlen Festharz und einer 25 Tle Festharz entsprechenden Menge der nachfolgend beschriebenen Pigmentpaste (= 83 Tle, enthaltend 40 Tle Pigment), sowie Neutralisation, Katalysatorzusatz und Verdünnen auf 18 % Festkörpergehalt mit deionisiertem Wasser Lacke hergestellt, die in bekannter Weise auf zinkphosphatiertem Stahlblech elektrisch abgeschieden werden. Bei der in Tabelle 3 angegebenen Einbrenntemperatur zeigen die beschichteten Bleche bei einer Filmstärke von 23 ± 2 µm eine Salzsprühbeständigkeit nach ASTM-B 117-64 von mehr als 1000 Stunden (Ablösung am Kreuzschnitt unter 2 mm), sowie eine Beständigkeit gegenüber 200 MEK-Doppelhüben.

Tabelle 3

| Beispiel | 1 | 2 | 3 | 4 | 5 |
|---|---|---|---|---|---|
| Neutralisation mMol HCOOH/ 100 g Festharz | 30 | 40 | 45 | 60 | 50 |
| Katalysator % Metall | 0,8 Sn | 0,3 Co | 0,8 Sn | 0,5 Pb | 0,8 Sn |
| Einbrenntemp. °C / 25 Minuten | 160 | 160 | 150 | 155 | 160 |

Die eingesetzte Farbpaste setzt sich aus 100 Tlen Anreibeharz (fest), 1 Tl Farbruß, 12 Tlen basisches Bleisilikat und 147 Tlen Titandioxid zusammen. Die Herstellung des Anreibeharzes erfolgt in folgender Weise: 500 Tle eines Epoxidharzes auf Basis von Bisphenol A (Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt und mit 97 Tlen 3-normaler Ameisensäure partiell neutralisiert. Der resultierende Festkörpergehalt beträgt 58.8 %.

## Ansprüche

1. Verfahren zur Herstellung von nach Protonierung wasserverdünnbaren und bei erhöhter Temperatur selbstvernetzenden kationischen Lackbindemitteln auf der Basis von Harnstoffgruppierungen aufweisenden modifizierten Epoxidharzen, dadurch gekennzeichnet, daß man β-Hydroxyaminen der allgemeinen Formel

$$\left(R_1 - NH - CH_2 - CH(OH)CH_2 - O\right)_{2-4} R_2$$

wobei $R_1$ einen (Cyclo)-Alkylrest und/oder einen Hydroxyalkylrest und/oder einen tert.-Amino-(cyclo)-alkylrest, sowie gegebenenfalls einen bei der Umsetzung von Glycidylgruppen mit einem primär-sekundären oder einem diprimären Amin resultierenden Rest und $R_2$ einen aliphatischen und/oder aromatischen Rest einer Polyepoxidverbindung bedeutet, bei 30 bis 50°C mit partiell blockierten Di-oder Polyisocyanaten in einem solchen Verhältnis umsetzt, daß pro sekundärer Aminogruppe eine freie Isocyanatgruppe eingesetzt wird, und das Reaktionsprodukt bei 80 bis 130°C, gegebenenfalls in Gegenwart eines basischen Katalysators, mit 0,5 bis 1,0 Mol Formaldehyd pro eingesetzter Isocyanatgruppe unter Entfernung von 1 Mol Reaktionswasser pro Mol Formaldehyd reagiert, wobei die so erhaltenen Produkte eine Aminzahl von mindestens 30 mg KOH/g aufweisen, die auf tertiären Aminogruppen beruht, welche aus einem tert.-Amino-(cyclo)-alkylrest und/oder aus tertiäre Aminogruppen aufweisenden Blockierungsmitteln in den Isocyanatverbindungen stammen.

2. Verfahren nach Anspruch 1, dadurch gekennzeichnet, daß man β-Hydroxyamine einsetzt, bei denen $R_2$ den Rest eines durch Kettenverlängerung mit di-oder polyfunktionellen Verbindungen modifizierten Di- oder Polyglycidylethers darstellt.

3. Verfahren nach den Ansprüchen 1 und 2, dadurch gekennzeichnet, daß man als β-Hydroxyamine Umsetzungsprodukte von N,N-Dialkylendiaminen mit Diglycidylverbindungen, vorzugsweise Epoxidharzen auf Basis von Diphenylolalkanen einsetzt.

4. Verwendung der nach den Ansprüchen 1 bis 3 hergestellten Bindemittel zur Formulierung von wasserverdünnbaren Lacken, insbesonders von kathodisch abscheidbaren Elektrotauchlacken.